# EUROPEAN PATENT APPLICATION

(11) **EP 4 725 991 A1**
(43) Date of publication of application: **15.04.2026**
(21) Application number: 25207432.3
(22) Date of filing: 08.10.2025
(51) Int. Cl.: C08L 23/12, C08L 53/02, C08L 23/14, B32B 27/32, E04D 5/06

(54) **THERMOPLASTIC POLYOLEFIN COMPOSITIONS**

(30) Priority: 12.10.2024 US 202463706620 P
(71) Applicant: Kraton Polymers Nederland B.V., 1322 CE Almere (NL)
(72) Inventor: Dharmarajan, Narayanaswami, Houston, 77084 (US)
(74) Representative: Henkel & Partner mbB

(57) **Abstract**

A thermoplastic polyolefin (TPO) composition is disclosed comprising (a) a polypropylene impact copolymer (ICP); (b) a polymer selected from: (b-i) a hydrogenated styrenic block copolymer (HSBC), and (b-ii) a polypropylene based elastomer (PBE); (c) fillers; (d) optionally a polyolefin elastomer (POE), and (e) optional additives. The HSBC comprises at least one block "S" composed of vinyl aromatic units, and at least one block "R" composed of hydrogenated diene units and optionally vinyl aromatic units, and has a vinyl aromatic unit content (VAC) of 5 to 45 wt.%, and a block "S" molecular weight (Mₚ) of 2 to 20 kg/mol. The TPO composition reduces stiffness while providing a balanced combination of mechanical and rheological properties, and is suitable for use in roofing membranes that can be installed without adhesives or VOC-based solvents.

## Description

### TECHNICAL FIELD

The disclosure relates to thermoplastic polyolefin (TPO) compositions, methods of preparation, and use thereof in roofing applications.

### BACKGROUND

Roofing membranes are widely used to cover flat, low-slope, and steep-slope roofs in commercial and industrial buildings such as shopping centers, hospitals, warehouses, and factories. These membranes are typically prepared from polymer compounds formulated with ethylene-propylene-diene monomer (EPDM), poly(vinyl chloride) (PVC), or thermoplastic olefins (TPO). One or more challenges associated with such membranes include limitations in color (e.g., black coloration due to carbon black), the need for specialized adhesives for attachment to roof substrates, and the use of volatile organic compound (VOC) solvents during installation.

The development of thermoplastic polyolefin (TPO) membranes has provided a more sustainable alternative. TPOs combine elastomeric properties with thermoplastic processability and can be formulated without carbon black to produce reflective membranes. Unlike EPDM and PVC membranes, TPO membranes can be installed by robotic heat welding without adhesives or VOC based solvents, offering advantages in sustainability, installation efficiency, and environmental impact. However, existing TPO membranes often lack the desired balance of mechanical and rheological properties.

There is still a need for a thermoplastic polyolefin (TPO) composition comprising polypropylene impact copolymers in combination with an elastomer selected from hydrogenated styrenic block copolymers (HSBCs) and polypropylene based elastomers (PBEs). Such compositions reduce stiffness and provide a balance of other properties.

### SUMMARY

In one aspect, the disclosure relates to a thermoplastic polyolefin (TPO) composition comprising, consisting essentially of, or consisting of: (a) 15 to 50 wt.% of a polypropylene impact copolymer (ICP) having a melt flow rate (MFR) of < 1.0 g/10 min, measured at 230°C with 2.16 kg load according to ASTM D1238; (b) 10 to 45 wt.% of a polymer selected from the group consisting of: (b-i) a hydrogenated styrenic block copolymer (HSBC), and (b-ii) a polypropylene based elastomer (PBE); (c) 5 to 50 wt.% of a filler; (d) 0 to 30 wt.% of a polyolefin elastomer (POE); and (e) 0 to 10 wt.% of an additive, based on total weight of the TPO composition. The HSBC comprises at least one block "S" composed of vinyl aromatic units and at least one block "R" composed of hydrogenated diene units and optionally vinyl aromatic units. The HSBC has a total vinyl aromatic unit content (VAC) of 5 to 45 wt.%, measured by ¹H NMR, and a molecular weight (Mₚ) of the block "S" of 2 to 20 kg/mol, measured according to ASTM D5296. The PBE has an ethylene content of 14 to 18 wt.% and a melt flow index (MFI) of < 5 g/10 min, measured at 190°C with 2.16 kg load according to ASTM D1238. Each of the above transitional terms (e.g., 'comprising,' 'consisting essentially of,' and 'consisting of') is intended to carry its conventional meaning as understood in patent law, or defined when appropriate.

In a second aspect, the TPO composition has a flexural modulus of < 850 MPa, measured according to ASTM D790; and a MFR of > 1.3 dg/min, measured at 230°C with 2.16 kg load, according to ASTM D1238.

In a third aspect, the TPO composition exhibits at least 10% reduction in flexural modulus relative to a TPO composition without the polymer of component (b).

In a fourth aspect, the ICP is a heterophasic polypropylene comprises: (i) a crystalline polypropylene homopolymer matrix phase and (ii) a dispersed phase of an ethylene-propylene copolymer.

### DESCRIPTION

The following terms will be used throughout the specification.

"Consisting essentially of" means that the composition primarily includes the recited components and may additionally contain one or more components that do not materially affect the novel characteristics or intended function of the invention. In embodiments, such additional components are present in amounts of < 30 wt.%, < 20 wt.%, or < 10 wt.%, based on total weight of the composition.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C."

"Any of A, B, or C" refers to one option from A, B, or C.

"Any of A, B, and C" refers to one or more options from A, B, and C.

"Vinyl aromatic unit content" or VAC of a block copolymer refers to the weight percentage of polymerized vinyl aromatic monomers, e.g., styrene, para-methylstyrene, etc., in the block copolymer. VAC is calculated by dividing the total molecular weight of all vinyl aromatic units by the total molecular weight of the block copolymer. It can be determined using proton nuclear magnetic resonance spectroscopy (¹H NMR) and/or ¹³C NMR. VAC is sometimes used interchangeably with PSC (polystyrene content).

"Butylene unit content" refers to the content, in weight percentage, of the butylene units ("B") relative to all diene based units in a given polymer (e.g., hydrogenated block copolymer). The butylene units are formed through the polymerization of 1,3-butadiene monomer via 1,2-addition, followed by hydrogenation. The 1,3-butadiene monomer can also polymerize through 1,4-addition, which, upon hydrogenation, results in ethylene units ("E"). Both butylene and ethylene units can be present in the hydrogenated block copolymer, which can also contain vinyl aromatic units and/or other units derived from conjugated diene monomers, arranged in any order. The butylene unit content can be measured by 1H NMR and/or 13C NMR. The butylene unit ("B") content is sometimes used interchangeably with "vinyl content" prior to hydrogenation.

"Molecular weight" or Mw refers to the polystyrene equivalent molecular weight in kg/mol of a polymer block or a block copolymer. Mw can be measured with gel permeation chromatography (GPC) using polystyrene calibration standards, such as is done according to ASTM D5296. The GPC detector can be an ultraviolet or refractive index detector or a combination thereof. The chromatograph is calibrated using commercially available polystyrene molecular weight standards. Mw of polymers measured using GPC so calibrated are polystyrene equivalent molecular weights or apparent molecular weights. Mw expressed herein is measured at the peak of the GPC trace and is commonly referred to as polystyrene equivalent "peak molecular weight," designated as Mₚ.

"Hydrogenated SBC" or HSBC refers to a styrenic block copolymer (SBC) in which diene units are hydrogenated to a level > 90 mol%, or preferably > 95 mol%, or more preferably > 98 mol%, or < 100 mol%, and vinyl aromatic units are hydrogenated to < 20 mol%, or preferably < 10 mol%, or more preferably < 5 mol%.

"Hydrogenation level" refers to the level (in percentage) of saturation of the double bonds (e.g., olefinic, aromatic, etc.) into the block copolymer, can be measured by ¹H NMR.

"Residual unsaturation" or RU refers to the levels of unsaturation, i.e., carbon-carbon double bonds per gram of a block copolymer. RU can be measured using ¹H NMR or ozonolysis titration.

"Unit" refers to the structural building block derived from one or more polymerized monomers, representing the repeating entity that forms part of the polymer or copolymer chain. Unlike a "monomer," which is the individual molecule before polymerization, a "unit" is the transformed version of the monomer after undergoing the polymerization process.

"Coupling efficiency" or CE refers to the weight % of coupled polymer molecules relative to the total weight of both coupled and uncoupled polymer molecules. CE is expressed as a percentage (%) and can be used to estimate the content of diblock structures or, more generally, the proportion of "uncoupled arms" in the block copolymer. For example, a CE of 80% indicates that the block polymer contains 20 wt.% diblock (uncoupled) species and 80 wt.% triblock and multi-arm species.

"Polydispersity index" or PDI refers to a ratio of a weight average molecular weight (M_{w}) to a number average molecular weight (Mₙ), sometimes also called molecular weight distribution. PDI is used to indicate distribution of polymer chain molecular weights in a given polymer.

The present disclosure relates to a thermoplastic polyolefin (TPO) composition comprising: (a) a polypropylene impact copolymer (ICP); (b) a polymer component selected from a hydrogenated styrenic block copolymer (HSBC) and a polypropylene based elastomer (PBE); (c) one or more fillers; (d) optionally, a polyolefin elastomer (POE); and (e) optional additives. The TPO composition exhibits enhanced durability and mechanical performance and is particularly suitable for use in roofing applications, including roofing membranes.

(Polypropylene Impact Copolymers (ICPs)): The ICP is a heterophasic polypropylene comprising: (i) a crystalline polypropylene homopolymer matrix phase and (ii) a dispersed ethylene-propylene copolymer phase. The presence of the dispersed ethylene-propylene phase provides enhanced toughness and impact resistance compared to the crystalline polypropylene homopolymer alone. In embodiments, the ethylene-propylene copolymer contains ethylene units in an amount of 40 - 70, or 45 - 65, or 40 - 55, or < 60, or < 55 wt.%, based on total weight of the ethylene-propylene copolymer.

In embodiments, the dispersed phase of the ICP comprises the ethylene-propylene copolymer in amounts of 10 - 40, or 15 - 35, or 20 - 30, or 10 - 30, or 15 - 30, or < 30, or < 25 wt.%, based on total weight of the ICP, with the remainder being the polypropylene homopolymer matrix.

In embodiments, the ICP has an ethylene content of 25 - 50, or 30 - 45, or 25 - 40, or 30 - 40, or > 25, or < 50, or < 45 wt.%, based on total weight of the ICP.

In embodiments, the dispersed phase of the ICP further comprises other (co)polymers such as ethylene-propylene rubber (EPR), ethylene-propylene-diene monomer (EPDM) rubber, polyethylene, plastomers, and mixtures thereof. Such (co)polymers can be present in amounts of 1 - 40, or 5 - 35, or 10 - 25 wt.%, based on total weight of the dispersed phase.

In embodiments, the crystalline polypropylene homopolymer matrix includes small amounts of a comonomer, e.g., < 10, or < 5 wt.% of ethylene, butene, 1-hexene, 1-octene, or similar α-olefins.

The ICP as a whole can exhibit a melt flow rate (MFR) of 0.10 - 1.0, or 0.10 - 0.80, or 0.10 - 0.50, or 0.15 - 0.45, or 0.20 - 0.40, or 0.25 - 0.35, or 0.25 - 0.50, or 0.10 - 0.40, or > 0.15, or < 1.0, or < 0.50 g/10 min, as measured at 230°C with a 2.16 kg load according to ASTM D1238.

In embodiments, the ICP has a density of 0.80 - 1.0, or 0.82 - 0.98, or 0.85 - 0.95, or 0.88 - 0.92 g/cm³, measured according to ASTM D792.

In embodiments, the ICP has a Vicat softening point of 130 - 160°C, or 135 - 155°C, or 140 - 150°C, or 130 - 150°C, or 140 - 160°C, as determined by ASTM D1525.

ICPs can be produced using conventional reactor technology. In embodiments, propylene is polymerized in a first reactor to form a high-crystalline polypropylene homopolymer, which is then transferred into a secondary reactor where additional propylene and ethylene are copolymerized in the presence of the polypropylene homopolymer. In embodiments, the ICP is interpolymerized within a single reactor rather than in two reactors in series. The resulting ICPs, whether prepared by single- or multi-reactor processes, can be further blended with other polymers or components.

In embodiments, the TPO composition comprises the ICP in amounts of 15 - 50, or 18 - 48, or 19 - 47 wt.%, based on total weight of the TPO composition.

(Polymer Components): The TPO composition comprises a polymer selected from the group consisting of a hydrogenated styrenic block copolymer (HSBC) and a polypropylene based elastomer (PBE).

In embodiments, the polymer is added in amounts of 10 - 45, or 12 - 40, or 15 - 45, or 10 - 25, or 12 - 22, or 20 - 45, or 25 - 40, or > 10, or < 45 wt.%, based on total weight of the TPO composition.

(Hydrogenated Styrenic Block Copolymers (HSBCs)): The HSBC can be a linear, branched, or radial block copolymer comprising at least one block "S" composed of vinyl aromatic units and at least one rubbery block "R" (block "R") consisting of hydrogenated diene units and optionally vinyl aromatic units. The vinyl aromatic units are derived from polymerized vinyl aromatic monomers, while the hydrogenated diene units, prior to hydrogenation, are derived from polymerized conjugated diene monomers.

In embodiments, the HSBC is any of a linear or branched (multi-arm) block copolymer having a general structure selected from: S-R, (S-R)ₙX, S-R-S, S-R-S-R, R-S-R-S-R, (R-S-R)ₙX, S-R-S-R-S, (S-R-S)ₙX, and mixtures thereof; n is an integer from 2 to 30, or 2 to 20, or 2 to 10, and X is a residue of a coupling agent.

In embodiments, each block "R" is a block selected from E/B, E/B/S, EP/MB, EP/MB/S, E/B/EP/MB, and combinations thereof.

In embodiments, block "R" is in the form of E/B composed of ethylene ("E") units and butylene ("B") units which are hydrogenated 1,4-butadiene units and hydrogenated 1,2-butadiene units, respectively.

In embodiments, block "R" is in the form of E/B/S composed of ethylene ("E") units, butylene ("B") units, and vinyl aromatic units.

In embodiments, block "R" is in the form of EP/MB composed of ethylene-propylene (EP) units and methyl-butylene (MB) units. Each EP unit is a hydrogenated 1,4-isoprene unit and each MB unit is a hydrogenated 3,4-isoprene unit and a hydrogenated 1,2-isoprene unit.

In embodiments, block "R" is in the form of EP/MB/S composed of EP units, MB units, and vinyl aromatic units.

In embodiments, block "R" is in the form of E/B/EP/MB composed of ethylene ("E") units, butylene ("B") units, EP units, and MB units.

In embodiments, the coupling agent "X" includes bi- or polyfunctional compounds, for example divinylbenzene, halides of aliphatic or araliphatic hydrocarbons, such as 1,2-dibromoethane, bis(chloromethyl)benzene, silicon tetrachloride, dialkyl- or diarylsilicon dichloride, alkyl- or arylsilicon trichloride, tin tetrachloride, alkylsilicon methoxides, alkyl silicon ethoxides, polyfunctional aldehydes, such as terephthalic dialdehyde, ketones, esters, anhydrides, or epoxides. In embodiments, the coupling agent is selected from methyltrimethoxysilane, methyltriethoxysilane, tetramethoxysilane, dimethyladipate, gamma-glycidoxypropyltrimethoxy silane, and mixtures thereof. In embodiments, the HSBC has a coupling efficiency (CE) of > 60%, or < 98%, or 60 - 98%, or 65 - 95%.

In embodiments, the vinyl aromatic monomer is selected from the group consisting of styrene, para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, ortho-substituted styrene, meta-substituted styrene, alpha-methylstyrene, 1,1-diphenylethylene, and mixtures thereof.

In embodiments, the conjugated diene monomer is selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

In embodiments, each block "S" has a hydrogenation level of < 30%, or < 20%, or < 10%, or < 5%, based on total double bonds present in the block "S." In embodiments, diene units in each block "R" have a hydrogenation level of > 80%, or > 90%, or > 95%, or > 98%, or up to 100%, or 80 - 99%, or 90 - 98%.

In embodiments, the HSBC is a mixture of at least two block copolymers selected from the group consisting of diblock species and species with more than 2 blocks (e.g., triblock, tetrablock, pentablock, etc.). In embodiments, the diblock species constitutes from 1 - 40, or 2 - 35, or 3 - 15, or 15 - 35, or > 3, or < 35 wt.%; the species with more than 2 blocks constitute from up to 99 wt.%, or 60 - 99, or 65 - 98, or 85 - 97, or 65 - 85, or > 65, or < 97 wt.%, based on total weight of the HSBC.

In embodiments, the HSBC has a residual unsaturation (RU) of 0 - 0.5, or 0.01 - 0.4, or 0.05 - 0.5, or < 0.5, or < 0.4, or < 0.3, or < 0.2, or < 0.1 meq/g, can be measured by ¹H NMR or ozonolysis.

In embodiments, the HSBC has a butylene unit ("B") content of 30 - 90, or 35 - 85, or 40 - 80, or 30 - 55, or 65 - 85, or > 35, or < 85 wt.%, based on total weight of hydrogenated diene units in the HSBC.

In embodiments, the HSBC has a vinyl aromatic unit content (VAC) of 5 - 45, or 8 - 40, or 10 - 35, or 7 - 18, or 25 - 45, or > 8, or > 10, or < 40 wt.%, based on total weight of the HSBC.

In embodiments, each block "S" has a molecular weight (Mₚ) of 2 - 20, or 3 - 18, or 4 - 15, or 3 - 12, or 5 - 15, or > 2, or > 4, or < 15 kg/mol.

In embodiments, block E/B (if present) has a molecular weight (Mₚ) of 90 - 240, or 95 - 230, or 100 - 220, or 110 - 210 kg/mol.

In embodiments, block E/B/S (if present) has a molecular weight (Mₚ) of 90 - 240, or 95 - 230, or 100 - 220, or 110 - 210 kg/mol.

In embodiments, the HSBC has a molecular weight (Mₚ) of 80 - 250, or 90 - 245, or 100 - 240, or 105 - 230, or 110 - 250, or 120 - 160, or 180 - 225, or 130 - 215, or 105 - 150 kg/mol.

In embodiments, the HSBC has a melt flow rate (MFR) of 10 - 40, or 12 - 35, or 15 - 30, or 10 - 25, or 18 - 35, or > 15, or < 30 dg/min, measured at 230°C with 5 kg load. In embodiments, the HSBC has a MFR of 2 - 55, or 7 - 50, or 9 - 48, or 10 - 45, or 5 - 15, or 35 - 50, or 2 - 10, or > 2, or < 50 dg/min, measured at 230°C with 2.16 kg load. All MFRs are according to ASTM D1238.

In embodiments, the HSBC has a molecular weight (Mₚ) ratio of the block E/B to the block "S" ranging from 15:1 - 40:1, or 18:1 - 38:1, or 20:1- 35:1, or 22:1 - 37:1.

In embodiments, the HSBC has a molecular weight (Mₚ) ratio of the block E/B/S to the block "S" ranging from 10:1 - 25:1, or 12:1 - 22:1, or 14:1 - 20:1, or 10:1 - 18:1, or 14:1 - 25:1.

In embodiments, the HSBC has a general structure S-E/B-S having a butylene unit ("B") content of 30 - 55 wt.%, a VAC of 7 - 18 wt.%, a Mₚ of block "S" of 3 - 12 kg/mol, a Mₚ of block copolymer of 120 - 160 kg/mol, a MFR 15 - 30 dg/min at 230°C/5 kg, a diblock content of 15 - 35 wt.%, and a molecular weight (Mₚ) ratio of the block E/B to the block "S" ranging from 22:1 - 37:1.

In embodiments, the HSBC has a general structure of S-E/B-S, S-E/B/S-S, and mixtures thereof, having a butylene unit ("B") content of 65 - 85 wt.%, a VAC of 25 - 45 wt.% or 7 - 18 wt.%, a Mₚ of block "S" of 3 - 12 kg/mol, a Mₚ of block copolymer of 105 - 150 kg/mol or 180 - 225 kg/mol, a MFR of any of 2 - 15 dg/min or 35 - 50 dg/min at 230°C/2.16 kg, a diblock content of 3 - 15 wt.%, a molecular weight (Mₚ) ratio of the block E/B (if present) to the block "S" ranging from 22:1 - 37:1, and a molecular weight (Mₚ) ratio of the block E/B/S (if present) to the block "S" ranging from 14:1 - 20:1.

In embodiments, the HSBC is functionalized with at least one functional group, e.g., hydroxyl group, amino group, carboxyl group, acid anhydride group, epoxy group, isocyanate group, silanol group, silane group, and the like.

(Polypropylene Based Elastomers (PBEs)): In embodiments, the TPO composition comprises a PBE which is a copolymer of propylene and ethylene monomers.

In embodiments, the PBE comprises an ethylene unit content of 14 - 18, or 14 - 17, or 15 - 17, or 14 - 16, or 15 - 16, or > 14, or < 18 wt.%, based on total weight of the PBE, remainder being propylene units.

In embodiments, the PBE has a density of 0.850 - 0.920, or 0.855 - 0.910, or 0.860 - 0.900 g/cm³, measured according to ASTM D792.

In embodiments, the PBE has a glass transition temperature of -40 to -20°C, or - 35 to -25°C, measured by DSC.

In embodiments, the PBE has a melt temperature of 50 - 120°C, or 55 - 100°C, or 60 - 80°C, or 50 - 70°C, measured by DSC.

In embodiments, the PBE has a melt flow index (MFI) 0.1 - 15, or 0.5 - 8, or 0.5 - 5, or 0.1 - 3, or > 0.1, or > 0.5, or < 5 g/10 min, measured at 190°C with 2.16 kg load, according to ASTM D1238.

(Fillers): The TPO composition comprises one or more fillers to provide bulk reinforcement and processing advantages. Examples of fillers include magnesium carbonate hydrate, magnesium carbonate, magnesium calcium carbonate hydrate, magnesium calcium carbonate, magnesium hydroxide (Mg(OH)₂·xH₂O), calcium carbonate, aluminum trihydroxide, magnesium silicate, sepiolite, wollastonite (calcium silicate), kaolin clay, montmorillonite, boehmite, alumina trihydrate, perlite, vermiculite, glass fibers, glass microspheres, and mixtures thereof.

In embodiments, the filler also performs the role of a flame retardant, with the filler decomposing endothermically to release water or carbon dioxide, dilute combustible polymer content, and form insulating barrier layers, thereby contributing to improved fire resistance of the composition. Examples include aluminum trihydroxid, boehmite, huntite and hydromagnesite, magnesium carbonate (MgCO₃) and dolomite (CaMg(CO₃)₂), wollastonite, calcium carbonate, and magnesium hydroxide.

In embodiments, the filler is magnesium hydroxide (Mg(OH)₂·xH₂O). In further embodiments, the filler is aluminum trihydroxide, huntite-hydromagnesite, alone or in combination.

In embodiments, the filler is pre-blended into a masterbatch with any of ICP, low density polyethylene (LDPE), POE, polypropylene, SBC, etc. Such masterbatches can contain > 40, or > 50, or > 60, or > 70, or 45 - 80, or 50 - 75 wt.% of the filler, based on total weight of the masterbatch, with the remainder being the ICP.

In embodiments, the filler is added in amounts of 5 - 50, or 10 - 45, or 15 - 40, or 20 - 50, or 25 - 45, or > 5, or < 50 wt.%, based on total weight of the TPO composition.

(Optional Polyolefin Elastomers (POEs)): In embodiments, the TPO composition further comprises a POE selected from an ethylene-α-olefin copolymer, a propylene-α-olefin copolymer, and mixtures thereof.

In embodiments, the ethylene-α-olefin copolymer is a copolymer of ethylene and at least one C₃-C₂₀ α-olefin, and contains ethylene units in amounts of > 50, or > 60, or > 70, or > 80, or > 90 wt.%, based on total weight of the copolymer, with the balance being C₃-C₂₀ α-olefin units.

In embodiments, the propylene-α-olefin copolymer is a copolymer of propylene and at least one C₄-C₂₀ α-olefin, and contains propylene units in amounts of > 50, or > 60, or > 70, or > 80, or > 90 wt.%, based on total weight of the copolymer, with the balance being C₄-C₂₀ α-olefin units.

Examples of suitable C₃-C₂₀ or C₄-C₂₀ α-olefins include propylene, isobutylene, 1-butene, 1-hexene, 1-pentene, 4-methyl-1-pentene, 1-heptene, 1-octene, 1-nonene, 1-decene, 1-dodecene, 1-tetradecene, 1-hexadecene, 1-octadecene, 1-eicosene, and related α-olefins.

Examples of POEs include ethylene / butene copolymers, ethylene / hexene copolymers, ethylene / octene copolymers, ethylene / α-olefin / diene modified interpolymers (e.g., ethylene / propylene / diene modified interpolymers, ethylene / propylene / octene terpolymers, etc.), ethylene / propylene copolymer, propylene / 1-butene copolymers, propylene / hexene copolymers, propylene / 4-methyl-1-pentene copolymers, propylene / 1-octene copolymers, propylene / ethylene / 1-butene copolymers, propylene / ethylene / ethylidene norbornene copolymers, propylene / ethylene / 1-hexene copolymers, propylene / ethylene / 1-octene copolymers, propylene / styrene copolymers, and propylene / ethylene / styrene copolymers.

In embodiments, the POE is prepared by a metallocene-catalyzed polymerization process. The resulting materials can exhibit measurable properties distinguishable from polyolefins having the same comonomer types and weight percentages but produced by conventional Ziegler-Natta polymerization processes.

In embodiments, the POE further comprise C₄-C₁₈ diolefin and / or alkenylbenzene.

In embodiments, the POE has a density of 0.850 - 0.920, or 0.855 - 0.915, or 0.860 - 0.910, or 0.865 - 0.905 g/cm³, measured according to ASTM D792.

In embodiments, the POE has a melt flow index (MFI) of 0.1 - 50, or 0.5 - 30, or 0.1 - 20, or 0.1 - 10, or 0.5 - 8, or > 0.5, or < 10 g/10 min, measured at 190°C with 2.16 kg load, according to ASTM D1238.

In embodiments, the POE has a number average molecular weight (Mₙ) of 20 - 400, or 30 - 350, or 40 - 300, or 50 - 200, or 20 - 100, or 40 - 90 kg/mol.

In embodiments, the POE has a PDI of 1.7 - 3.5, or 1.8 - 3.0, or 1.9 - 2.8, or 2.0 - 2.5, or > 2.0, or < 2.5.

In embodiments, the POE has a glass transition temperature (T_{g}) of < 0, or < - 10°C, or > -40°C, or > -30°C.

In embodiments, the POE has a melting point (Mₚ) of > 60°C, or > 70°C, or < 100°C, or 60 - 100°C, or 65 - 95°C, or 70 - 90°C.

In embodiments, the POE, if present, is added in amounts of up to 30 wt.%, or 5 - 30, or 7 - 25, or 5 - 22 wt.%, based on total weight of the TPO composition.

(Optional Additives): The TPO composition further comprises an additive selected from the group consisting of activators, curing agents, UV stabilizers, neutralizing agents, thickeners, coalescing agents, slip agents, release agents, antimicrobial agents, surfactants, flame retardants (other than fillers mentioned above), antioxidants, antiozonants, color change pH indicators, plasticizers, tackifiers, film forming additives, pigments, catalysts, other resins, redox couples, viscosity modifiers, deaerators, toughening agents, adhesion promoters, heat stabilizers, lubricants, flow modifiers, drip retardants, antiblocking agents, antistatic agents, processing aids, stress-relief additives, and mixtures thereof.

Examples of pigments include titanium dioxide, zinc oxide, lithopone, antimony oxide, calcium carbonate, magnesium carbonate, aluminum hydroxide, and mixtures thereof. The pigment can be incorporated as a masterbatch containing the pigment and a polymer matrix such as a polypropylene homopolymer, polyethylene, HSBC, PBE, or POE. The polymer matrix of the masterbatch can have a MFR of 10 to 300 g/10 min as measured at 230°C with 2.16 kg load according to ASTM D1238, and can be present in an amount of 20 to 40 wt.% based on total weight of the masterbatch.

Examples of UV stabilizers include hindered amine light stabilizers (HALS), benzotriazoles, benzophenones, triazines, and related compounds. The UV stabilizer can likewise be incorporated as a masterbatch containing the UV stabilizer and a polymer matrix such as polypropylene homopolymer, polyethylene, HSBC, PBE, or POE. The polymer matrix of the masterbatch can have a MFR of 10 to 300 g/10 min as measured at 230°C with 2.16 kg load according to ASTM D1238, and can be present in an amount of 70 to 90 wt.% based on total weight of the masterbatch.

In embodiments, the additive, if added, is in amounts of up to 10, or 0.5 - 10, or 1 - 5, or 2 - 5 wt.%, based on total weight of the TPO composition.

(Thermoplastic Polyolefin (TPO) Compositions): The TPO composition, based on total weight of the composition, comprises: (a) 15 - 50 wt.% of an ICP, (b) 10 - 45 wt.% of a polymer selected from any of HSBC and PBE, (c) 5 - 50 wt.% of at least a filler, and (d) up to 30 wt.% of a POE.

(Preparation of TPO Compositions / Articles): The TPO composition can be processed by conventional methods known in the art, wherein the individual components are combined and blended by melt mixing. In embodiments, the melt-mixed composition can be extruded into pellets for subsequent processing. In other embodiments, the individual components can be melt mixed and converted directly into an article, such as a sheet, without the need for pre-compounding. Articles can be formed by techniques such as injection molding, blow molding, overmolding, rotomolding, thermoforming, casting, extrusion, and profile extrusion

In embodiments, compounding of the TPO composition is carried out at a temperature ranging from 150 - 250°C, or 180 - 245°C, or 200 - 240°C, or 180 - 235°C, or 210 - 250°C. The various components can be added in any order or simultaneously. In embodiments, additives are incorporated in the form of a pre-mixed masterbatch.

In embodiments, a roofing membrane is prepared from the TPO composition using conventional extrusion processes and optionally laminated into a multi-layer sheet. The roofing membrane can include two or more sheets that are joined together to form a laminate structure.

In embodiments, the roofing membrane has a thickness of 0.1 - 50 mm, or 0.5 - 20 mm, or 1 - 10 mm, or 0.5 - 5 mm.

(Properties of TPO Compositions): A membrane obtained from the TPO composition exhibits flexibility across service temperatures ranging from -40 to 50°C and maintains resistance to roll blocking at elevated temperatures, e.g., > 100°C. The membrane is further characterized by a low stiffness, contributing to ease of installation and improved durability.

In embodiments, the TPO composition has a flexural modulus of < 850, or < 800, or > 40, or 40 - 750, or 80 - 720, or 100 - 700, or 100 - 680, or 200 - 700, or 500 - 700, or 100 - 350 MPa, measured according to ASTM D790.

In embodiments, the TPO composition has a tensile strength at yield of > 5, or < 30, or 5 - 30, or 6 - 25, or 7 - 22, or 8 - 20, or 7 - 16, or 10 - 15 MPa, measured according to ASTM D638.

In embodiments, the TPO composition has a tensile strength at break of > 5, or < 30, or 5 - 30, or 6 - 25, or 7 - 22, or 7 - 16, or 10 - 15 MPa, measured according to ASTM D638.

In embodiments, the TPO composition has an elongation at break of > 350%, or < 1200%, or 350 - 1200%, or 370 - 1150%, or 390 - 1100%, or 400 - 1050%, or 700 - 1000%, measured according to ASTM D638.

In embodiments, the TPO composition has a MFR of > 1.3, or < 15, or 1.3 - 15, or 1.5 - 12, or 1.7 - 10, or 1.3 - 8, or 1.4 - 7, or 2.5 - 5.5 dg/min, measured at 230°C with 2.16 kg load, according to ASTM D1238.

The elastic modulus of the TPO composition is measured by dynamic mechanical analysis (DMA), for example using a Discovery DMA 850 instrument from TA Instruments, at temperatures ranging from -70 to 110°C and at a frequency of 1 Hz.

In embodiments, the TPO composition has an elastic modulus at -40°C of < 9000, > 1000, or 1000 - 9000, or 1100 - 8800, or 1200 - 8500, or 3000 - 8300 MPa.

In embodiments, the TPO composition has an elastic modulus at -20°C of < 5000, or > 800, or 300 - 5000, or 320 - 4800, or 340 - 4600, or 600 - 3000 MPa.

In embodiments, the TPO composition has an elastic modulus at 0°C of < 3000, or > 100, or 100 - 3000, or 120 - 2800, or 200 - 2600, or 100 - 800 MPa.

In embodiments, the TPO composition has an elastic modulus at 20°C of < 1300, or > 50, or 50 - 1300, or 70 - 1200, or 500 - 1200, or 50 - 300 MPa.

In embodiments, the TPO composition has an elastic modulus at 40°C of < 800, or > 40, or 40 - 800, or 50 - 600, or 100 - 600, or 400 - 600, or 50 - 200 MPa.

In embodiments, the TPO composition demonstrates one or more of the following performance advantages relative to a TPO composition without the polymer component (b):
at least 10% reduction in a flexural modulus;
at least 5% increase in an elongation at break;
at least 5% reduction in an elastic modulus at 0°C;
at least 5% reduction in an elastic modulus at 20°C; and
at least 5% reduction in an elastic modulus at 40°C.

(Applications of TPO Compositions): The TPO composition can be processed into roofing membranes suitable for application on flat, low-sloped, or steep-sloped substrates. The roofing membrane can be secured to the underlying roof structure by conventional methods such as adhesive bonding, ballast systems, spot bonding, or mechanical fastening.

In embodiments, the roofing membrane is provided as a single-layer sheet or as a laminate comprising two or more layers joined together to form an integrated structure.

The roofing membrane can also be reinforced with a scrim, which can be selected from polyester, fiberglass, fiberglass-reinforced polyester, polypropylene, woven or non-woven fabrics such as nylon, or mixtures thereof.

In embodiments, the surface of the roofing membrane, on either the top or bottom side, is textured with patterns such as polyhedral shapes, conical projections, or random surface designs. Such texturing increases the surface area of the membrane, reduces glare, and enhances slip resistance.

(Analytical Methods): To identify and quantify the ICP and the PBE components, techniques such as differential scanning calorimetry (DSC) and thermo gravimetric analysis (TGA) can be used to distinguish crystalline polypropylene homopolymer domains from amorphous elastomeric phases. Fourier transform infrared spectroscopy (FTIR), ¹H NMR, and ¹³C NMR can be useful in determining comonomer content, including the ethylene content of the PBE and the distribution of diene units in the HSBC. Gel permeation chromatography (GPC) can be used to measure molecular weights, including the molecular weight of block "S" in the HSBC.

Quantification of vinyl aromatic unit content in the HSBC can be performed using NMR and ultraviolet (UV) spectroscopy. The relative amounts of HSBC and PBE phases can also be determined through transmission electron microscopy (TEM) or atomic force microscopy (AFM), which reveal phase morphology and dispersion within the matrix.

The melt flow rate (MFR) and melt flow index (MFI) of the composition can be measured directly according to ASTM D1238 at the specified temperature and load conditions. Fillers can be detected and quantified using techniques such as energy dispersive X-ray spectroscopy (EDX), X-ray fluorescence (XRF), inductively coupled plasma spectroscopy (ICP-OES or ICP-MS), or TGA.

Additives such as UV stabilizers, antioxidants, pigments, processing aids, etc., can be identified and quantified using chromatography (e.g., GC-MS or HPLC), FTIR, or UV spectroscopy. The relative weight percentages of the ICP, HSBC or PBE, filler, additives, and POE can be determined by a combination of gravimetric analysis, selective solvent extraction, and thermal fractionation, supported by compositional analysis from NMR and FTIR.

(Examples): The following examples are intended to be non-limiting.

The following test methods are used.

The components used in examples include:
ICP-1 is a polypropylene impact copolymer having MFR of 0.35 g/10 min at 230°C/2.16 kg, density of 0.90 g/cm³, Vicat softening point of 145°C, 15 - 30 wt.% of ethylene-propylene copolymer, 40 - 55 wt.% of ethylene units in ethylene-propylene copolymer, and 30 - 40 wt.% of overall ethylene unit content. ICP-1 is available from LyondellBasell.

HSBC-1 is a linear hydrogenated triblock copolymer (S-E/B-S) having VAC of 13.3 wt.%, Mₚ of block "S" of 5.3 kg/mol, Mₚ of block copolymer of 145 kg/mol, butylene unit ("B") content of 44 wt.%, MFR of 22 dg/min at 230°C/5 kg, CE of 71%, and diblock content of 29 wt.%.

HSBC-2 is a linear hydrogenated triblock copolymer (S-E/B/S-S) having VAC of 34.5 wt.%, Mₚ of block "S" of 7.2 kg/mol, Mₚ of block copolymer of 125 kg/mol, butylene unit ("B") content of 78 wt.%, CE of 93%, MFR of 43 g/10 min at 230°C/2.16 kg, CE of 93%, and diblock content of 7 wt.%.

HSBC-3 is a linear hydrogenated triblock copolymer (S-E/B-S) having VAC of 12.3 wt.%, Mₚ of block "S" of 5.7 kg/mol, Mₚ of block copolymer of 203 kg/mol, butylene unit ("B") content of 78 wt.%, MFR of 11 dg/min at 230°C/2.16 kg, CE of 95%, and diblock content of 5 wt.%.

HSBC-4 is a linear hydrogenated triblock copolymer (S-E/B-S) having VAC of 12.5 wt.%, Mₚ of block "S" of 6.4 kg/mol, Mₚ of block copolymer of 201 kg/mol, butylene unit ("B") content of 78 wt.%, MFR of 3.3 dg/min at 230°C/2.16 kg, CE of 93%, and diblock content of 7 wt.%.

POE-1 is an ethylene-hexene copolymer having MFI of 5 g/10 min at 190°C/2.16 kg, and density of 0.885 g/cm³.

POE-2 is an ethylene-hexene copolymer having MFI of 1 g/10 min at 190°C/2.16 kg, and density of 0.885 g/cm³.

PBE-1 is a polypropylene based elastomer having ethylene content of 16 wt.%, density of 0.862 g/cm³, and MFI of 1.4 g/10 min at 190°C/2.16 kg.

Titanium dioxide (TiO₂): a masterbatch with 20 to 40 wt.% of polypropylene homopolymer matrix.

UV-S: 2-(2-hydroxy-5-methylphenyl)benzotriazole, an UV stabilizer, a masterbatch with 70 to 90 wt.% of polypropylene homopolymer matrix.

(Examples 1-17): TPO Compositions were prepared by dry blending the individual components followed by compounding in a twin-screw extruder at a temperature of 225 - 235°C. Test specimens for property measurements were prepared by injection molding using a mold temperature of 50°C. The formulations of TPO compositions and the mechanical properties for examples 1 - 17 are presented in Table 1. Comparative examples C-Ex-1, C-Ex-4, and C-Ex-7 are provided for reference.

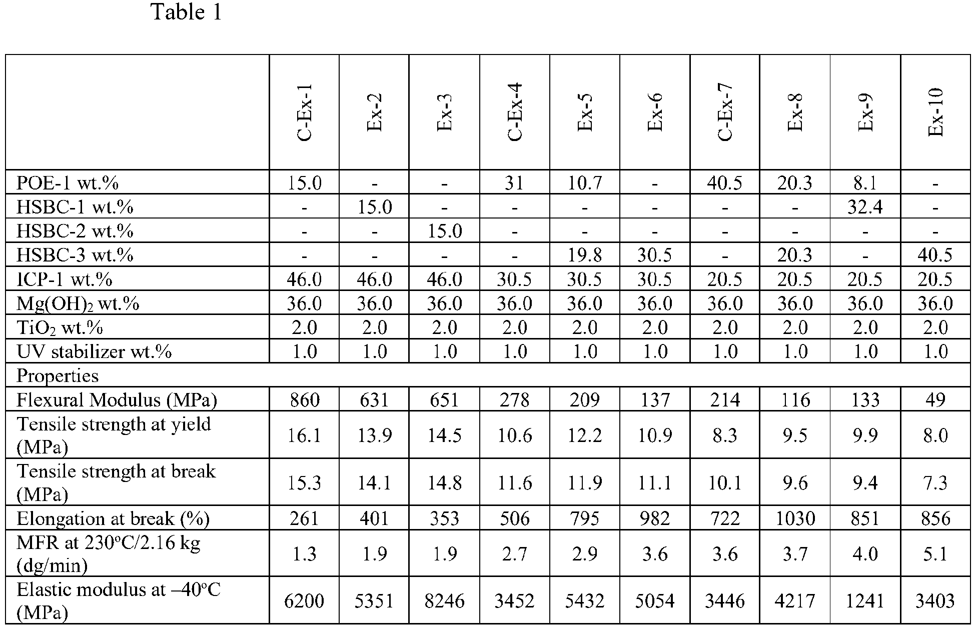

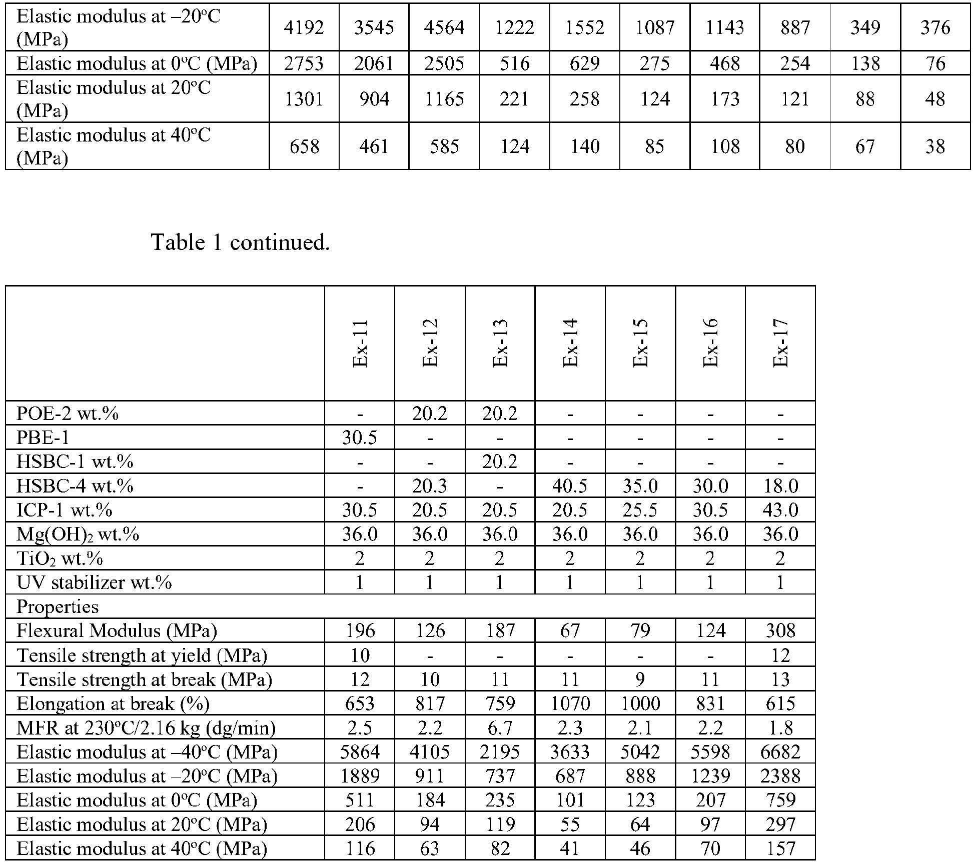

## Claims

1. A thermoplastic polyolefin composition comprising:
(a) 15 to 50 wt.% of a polypropylene impact copolymer having a melt flow rate of < 1.0 g/10 min, measured at 230°C with 2.16 kg load according to ASTM D1238;
(b) 10 to 45 wt.% of a polymer selected from the group consisting of:
(b-i) a hydrogenated styrenic block copolymer comprising at least one block "S" composed of vinyl aromatic units and at least one block "R" composed of hydrogenated diene units and optionally vinyl aromatic units,
wherein the hydrogenated styrenic block copolymer has:
a total vinyl aromatic unit content (VAC) of 5 to 45 wt.%, measured by ¹H NMR, and
a molecular weight (Mₚ) of the block "S" of 2 to 20 kg/mol, measured according to ASTM D5296, and
(b-ii) a polypropylene based elastomer having an ethylene content of 14 to 18 wt.% and a melt flow index (MFI) of < 5 g/10 min, measured at 190°C with 2.16 kg load according to ASTM D1238;
(c) 5 to 50 wt.% of filler;
(d) 0 to 30 wt.% of a polyolefin elastomer; and
(e) 0 to 10 wt.% of an additive, based on total weight of the thermoplastic polyolefin composition.

2. The thermoplastic polyolefin composition of claim 1, wherein the thermoplastic polyolefin composition has:
a flexural modulus of < 850 MPa, measured according to ASTM D790; and
a melt flow rate (MFR) of > 1.3 dg/10 min, measured at 230°C with 2.16 kg load,
according to ASTM D1238.

3. The thermoplastic polyolefin composition of any of claims 1-2, wherein the thermoplastic polyolefin composition exhibits at least a 10% reduction in flexural modulus relative to a thermoplastic polyolefin composition without the polymer of component (b).

4. The thermoplastic polyolefin composition of any of claims 1-3, wherein the polypropylene impact copolymer is a heterophasic polypropylene comprising: (i) a crystalline polypropylene homopolymer matrix phase and (ii) a dispersed phase of an ethylene-propylene copolymer.

5. The thermoplastic polyolefin composition of claim 4, wherein the ethylene-propylene copolymer comprises 40 to 70 wt.% of ethylene units, based on total weight of the ethylene-propylene copolymer.

6. The thermoplastic polyolefin composition of any of claims 4-5, wherein the dispersed phase of the polypropylene impact copolymer comprises 10 to 40 wt.% of the ethylene-propylene copolymer, based on total weight of the polypropylene impact copolymer.

7. The thermoplastic polyolefin composition of any of claims 1-3, wherein the polypropylene impact copolymer has at least one of:
an ethylene content of 25 to 50 wt.%, based on total weight of the polypropylene impact copolymer;
a melt flow rate of 0.10 to 0.80 g/10 min, measured at 230°C with 2.16 kg load; and
a density of 0.80 to 1.0 g/cm³.

8. The thermoplastic polyolefin composition of any of claims 1-3, wherein the polymer of component (b) is a hydrogenated styrenic block copolymer represented by a general structure selected from S-R, (S-R)ₙX, S-R-S, S-R-S-R, R-S-R-S-R, (R-S-R)ₙX, S-R-S-R-S, (S-R-S)ₙX, and mixtures thereof; where n is an integer from 2 to 30, and X is a residue of a coupling agent; wherein
each block "S" is composed of vinyl aromatic units, and
each block "R" is a block selected from E/B, E/B/S, EP/MB, EP/MB/S, E/B/EP/MB, and combinations thereof;
wherein
each block E/B is composed of ethylene ("E") units and butylene ("B") units,
each block E/B/S is composed of ethylene ("E") units, butylene ("B") units, and vinyl aromatic units,
each block EP/MB is composed of ethylene-propylene (EP) units and methyl-butylene (MB) units,
each block EP/MB/S is composed of ethylene-propylene (EP) units, methyl-butylene (MB) units, and vinyl aromatic units, and
each block E/B/EP/MB is composed of ethylene ("E") units, butylene ("B") units, ethylene-propylene (EP) units, and methyl-butylene (MB) units.

9. The thermoplastic polyolefin composition of claim 8, wherein the hydrogenated styrenic block copolymer has at least one of:
a butylene unit ("B") content of 30 to 90 wt.%, based on total weight of hydrogenated diene units; and
a vinyl aromatic unit content (VAC) of 10 to 35 wt.%.

10. The thermoplastic polyolefin composition of any of claims 8-9, wherein:
the block "S" has a molecular weight (Mₚ) of 4 to 15 kg/mol; and
the hydrogenated styrenic block copolymer has a molecular weight (Mₚ) of 80 to 250 kg/mol.

11. The thermoplastic polyolefin composition of any of claims 8-10, wherein the hydrogenated styrenic block copolymer is represented by a general structure of S-E/B-S, the hydrogenated styrenic block copolymer having:
a butylene unit ("B") content of 30 to 55 wt.%;
a vinyl aromatic unit content (VAC) of 7 to 18 wt.%;
a molecular weight (Mₚ) of block "S" of 3 to 12 kg/mol;
a molecular weight (Mₚ) of 120 to 160 kg/mol; and
a diblock content of 15 to 35 wt.%.

12. The thermoplastic polyolefin composition of any of claims 8-11, wherein the hydrogenated styrenic block copolymer is represented by a general structure selected from S-E/B-S, S-E/B/S-S, and mixtures thereof, the hydrogenated styrenic block copolymer having:
a butylene unit ("B") content of 65 to 85 wt.%;
a vinyl aromatic unit content of 25 to 45 wt.% or 7 to 18 wt.%;
a molecular weight (Mₚ) of block "S" of 3 to 12 kg/mol,
a molecular weight (Mₚ) of 105 to 150 kg/mol or 180 to 225 kg/mol; and
a di-block content of 3 to 15 wt.%.

13. The thermoplastic polyolefin composition of any of claims 1-3, wherein the polymer of component (b) is a polypropylene based elastomer, the polypropylene based elastomer having:
an ethylene content of 14 to 17 wt.%;
a melt flow index (MFI) of 0.5 to 5 g/10 min, measured at 190°C with 2.16 kg load; and
a density of 0.850 to 0.920 g/cm³.

14. The thermoplastic polyolefin composition of any of claims 1-3, wherein the thermoplastic polyolefin composition comprises 5 to 30 wt.% of the polyolefin elastomer, the polyolefin elastomer having:
a melt flow index (MFI) of > 0.5 g/10 min, measured at 190°C with 2.16 kg load according to ASTM D1238.

15. The thermoplastic polyolefin composition of any of claims 1-3, wherein the filler is selected from the group consisting of magnesium carbonate hydrate, magnesium carbonate, magnesium calcium carbonate hydrate, magnesium calcium carbonate, magnesium hydroxide, calcium carbonate, aluminum trihydroxide, magnesium silicate, sepiolite, wollastonite (calcium silicate), kaolin clay, montmorillonite, boehmite, alumina trihydrate, perlite, vermiculite, glass fibers, glass microspheres, and mixtures thereof.
